Europäisches Patentamt

European Patent Office

Office européen des brevets

(11) Publication number: **0 270 319**
**A2**

# EUROPEAN PATENT APPLICATION

(21) Application number: 87310509.2

(22) Date of filing: 27.11.87

(51) Int. Cl.⁴: **G06F 15/72**

(30) Priority: 03.12.86 US 937266

(43) Date of publication of application:
08.06.88 Bulletin 88/23

(84) Designated Contracting States:
AT BE CH DE ES FR GB GR IT LI LU NL SE

(71) Applicant: **LOGISTICS DATA SYSTEMS, INC.**
**11325 Seven Locks Road Suite 222**
**Potomac Maryland 20854(US)**

(72) Inventor: **Cohen, Robert M.**
**6424 Danville Ct.**
**Rockville Maryland 20852(US)**
Inventor: **Hughes, Christopher J.**
**12401 Deoudes Road**
**Boyds Maryland 20841(US)**

(74) Representative: **Beresford, Keith Denis Lewis et al**
**BERESFORD & Co. 2-5 Warwick Court High Holborn**
**London WC1R 5DJ(GB)**

(54) **Video C.A.D. system.**

(57) A desktop computer based Computer-Aided Design (CAD) system is disclosed which has photographic-resolution displays, internal evaluative numerical algorithms, and the capability of interactive, individual image manipulation by a user. The disclosure concentrates on a space management application of the CAD system. A practical embodiment comprises a frame buffer which is scanned and converted to a video image. The contents of this frame buffer are the end product of the invention, and are formed as follows. Photographic-resolution images are digitized and entered into a desktop computer along with preliminary entered data regarding the physical objects and interactively entered restraints imposed by the user. An evaluative numerical applications program executed by the desktop computer's central processing unit (CPU) causes the above digitized images to be moved into specific areas of the frame buffer in conformance with principles which vary with the particular application. Two embodiments respectively involve preliminary formation of a library of compressed images, and "on-the-fly" compression of digitized images. A high-speed, integer image compression method is also disclosed.

FIG. 1

## VIDEO C.A.D. SYSTEM

### FIELD OF THE INVENTION

The present invention relates to computer-aided design (CAD) systems having photographic-resolution displays, internal evaluative numerical algorithms, as well as the capability of interactive, individual image manipulation by a user. More specifically, the invention relates to. space management applications of those CAD systems.

### BACKGROUND OF THE INVENTION

The earliest video display devices performed only the barest function of representing a photographic-resolution image. The "user" of these systems was actually a passive observer.

As technology progressed over the decades, more sophistication was built into display systems. For example, radar display systems were devloped which would allow an operator to point a light pen at a particular blip on the radar screen and the system would respond by displaying information about the blip indicated, such as altitude, speed, or aircraft identity. Such a radar system embodies an early form of internally programmed, evaluative, numerical applications programming. With the economization in the electronics manufacturing field came the ability to produce relatively low-cost simulators and video games. The achievement of these devices was to allow a user to view a display and interactively change that display.

However, systems which possessed photographic-resolution displays lacked the ability either to numerically evaluate data relating to items displayed, or to allow a user to interactively alter the display. Conversely, systems which possessed the ability either to numerically evaluate data or facilitate user interaction had displays which were of a quality less than photographic resolution. These displays often consisted of "stick figures," line drawings, jagged silhouettes, or blocks of color. If a greater degree of realism were desired, as would be the case in aircraft simulators, very large and expensive computers would have to be employed to allow real-time interaction using displays which approached photographic resolution. But even with the continued economization of electronics hardware manufacture, the cost and size of such systems render them unusable for most applications.

In the context of this invention, certain terms must be explained. As is commonly used in the art, "pixels", or picture elements, are small dots which are the smallest units of visual information.

"Image", as used herein, denotes a plurality of pixels which have meaning to a user. Images generally, though not necessarily, occupy less than an entire display screen. An example of an image might be a set of pixels necessary to represent a consumer product.

A "frame" comprises one or more images, and generally occupies an entire screen. A "simulation frame" as used herein, is a frame which simulates a physical space partially or totally filled with images. An example of a simulation frame might comprise 50 images of various consumer products, plus images of the edges of shelves on which the products appear to rest, plus a background, if any. Pixels in a simulation frame usually number at least in the hundreds of thousands. Frames may comprise two interleaved "fields", but this is of little import in the context of this invention.

For the purposes of this invention, the term "photographic resolution" is to be understood as follows. First, "resolution" technically denotes the ability to "resolve" something. In the field to which this invention relates, it involves resolving details of images of physical objects. "Photographic resolution," as used herein, denotes a degree of realism meeting or exceeding that of a high-quality, noise-free television screen, or a video display of at least 512 by 482 pixels. In practical terms, "photographic resolution" implies that any detail that a lay observer would want to discern in a physical object would be easily and clearly discernible in a "photographic-resolution image" of that object. In other words, the display "looks real".

A more detailed, realistic image requires more information to describe it. When considering digitized images which can be stored and processed in digital computers, detailed and realistic images therefore demand longer processing times than the typical computer generated video image.

The dilemma of the tradeoff between photographic-resolution video representation, internal numerical algorithmic capabilities, and individual interactive image manipulation was yet to be economically resolved.

Various known systems possess only a subset of the above three features: photographic-resolution displays, internal numerical algorithm capabilities, and individual interactive image manipulation by a user. Ordinary television, as stated above, has photographic-resolution representation, but has no internal numerical algorithm capability nor any ability by a user to manipulate any images which form a subset of the video frame. A video display such as is found in non laser disk based video games has no true photographic-resolution representation and only very limited internal numerical algorithms. Present-day laser-disk video games systems do not have true individual image manipulation by the user, since the frames are stored internally as a large quantity of whole frames.

Paint systems have little or no numerical algorithm capabilities. Paint systems work purely on the level of individual picture elements. They have no concept of a figure; therefore the concept of individual image manipulation by a mathematical algorithm is foreign to them.

Computer-generated graphics do not provide truly photographic-resolution representation. However, in the application of solid modeling, such systems can properly be said to have achieved specific internal numerical algorithm capabilities with interactive image manipulation, albeit at great cost. Known computer-aided design/computer-aided manufacturing (CAD/CAM) systems, while having video representation of less than photographic resolution, achieve numerical algorithm and interactive image manipulation capabilities only at great cost.

There has been a need in the area of retail merchandising for a low-cut system with which a merchant can simulate the arrangement of items on store shelves in light of financial and aesthetic constraints, in addition to those constraints imposed by the physical arrangement of the shelving. One such system, SPACEMAN (SPACE MANager, available from Logistics Data Systems, Inc., of Potomac, Maryland), fulfills this need. SPACEMAN is a desktop computer-based system with which a user can manipulate uniformly colored rectangles on a video screen to simulate the moving of individual products on store shelves. An applications program internal to the desktop computer can analyze various financial constraints relating to the articles of merchandise, calculate an optimum arrangement of items on the store shelving and present its results on a video display. This allows a user to visually inspect the arrangement and alter it interactively to comply with aesthetic constraints.

However, the SPACEMAN system lacks the ability to interactively manipulate images which are of photographic resolution. This limitation inhibits the ability of the user to visualize how the products would actually appear on store shelves. The need exists for a low-cost system which can not only evaluate the financial implications of a wide variety of item arrangements and choose the best arrangement among them, but can also present a photographic-resolution display to the user while allowing him to alter that display interactively.

The crux of the problem with known systems was that the memory space required to store a digitized, photographic-resolution image did not lend itself to the demands of reduced physical space or economics. An interactive system involving photographic-resolution images demands that very large amounts of information be stored and processed in an amount of time which is reasonable to a user. Heretofore, greater speed of interaction was achieved only at the expense of image quality, or system cost and complexity.

Ideally, then, a system should fit into a small cabinet such as that of a desk-top computer. It should use a commensurately small amount of memory and should numerically process photographic-resolution digitized images fast enough to allow interaction with a user.

## SUMMARY OF THE INVENTION

The present invention overcomes the video display limitations which were inherent in known systems, including SPACEMAN. Since the system of the present invention is also desktop computer-based, it is also relatively low in cost. The system operates fast enough to allow a user to manipulate photographic-resolution images of physical objects on a video display simulating a physical area.

Previously known systems did not make best use of the realization that the final simulation frame always contains the same predetermined number of picture elements. This number is constant, regardless of the number or placement of digitized images within the simulation frame. The total number of picture elements of all the images in the simulation frame, plus any background picture elements, must add up to this predetermined number.

The present invention makes full use of the realization that the final simulation frame always has the same predetermined number of picture elements. Any image which is used during a user session is made to contain the very minimum number of picture elements necessary to fill that particular image's portion of the simulation frame. Hardware memory requirements and the corresponding space and money costs are thus minimized, for a given simulation frame size. Also, the image processing hardware is optimized for its greatest execution speed for a given simulation frame size, since the amount of information that must be moved in a given operation has been minimized. Since the images are already the size that they need to be when they are inserted into the simulation frame, they do not need to be "processed," but only moved. To execute any given interactively-entered command, the total amount of video information which must be moved is restricted to being less than or equal to the predetermined simulation frame size.

Any practical embodiment comprises a frame buffer which is scanned and converted to a video image. The contents of this frame buffer are the end product of the invention, and are formed as follows. Photographic-resolution images are digitized and entered into a desktop computer along with preliminarily entered data regarding the physical objects and interactively entered restraints imposed by the user. An evaluative numerical applications program executed by the desktop computer's central processing unit (CPU) causes the above digitized images to be moved into specific areas of the frame buffer in conformance with principles which vary with the particular application.

A first embodiment involves the preliminary formation of a library of compressed images. A second embodiment involves "on the fly" compression of digitized images which occupy larger blocks of memory than is necessary for the frame buffer.

Since the inventive concept of this invention concerns the optimization of the handling of video data, the applications program and the fundamental execution speed of the hardware can now become the focus of future attempts to optimization. Video data handling, per se, is no longer the main hindrance to this optimization.

The invention encompasses not only the application of arranging items on store shelving. The inventive concept encompasses any application where photographic resolution images must be spatially arranged according to both preprogrammed and interactively entered constraints.

BRIEF DESCRIPTION OF THE DRAWINGS

FIG.1 is a flow diagram of an illustrative embodiment of the invention as a whole.

FIG. 2 is a flow diagram of one embodiment of the Video Capture and Storage device 104 of FIG. 1.

FIG. 3 is a flow diagram of a second embodiment of the Video Capture and Storage device 104 of FIG. 1.

FIG. 4 is a diagram explaining a preferred embodiment of the compression algorithm employed in FIGS. 2 and 3.

FIG. 5 is a flow chart of the preferred compression algorithm.

FIG. 6 is a detailed flow chart of the essence of an expansion process occurring within the compression algorithm of FIG. 5.

FIG. 7 is a diagram of an expanded array which is an intermediate product in the compression algorithm of FIG. 5.

DETAILED DESCRIPTION OF THE INVENTION

Structure of the Invention

The structure of the invention will first be described.

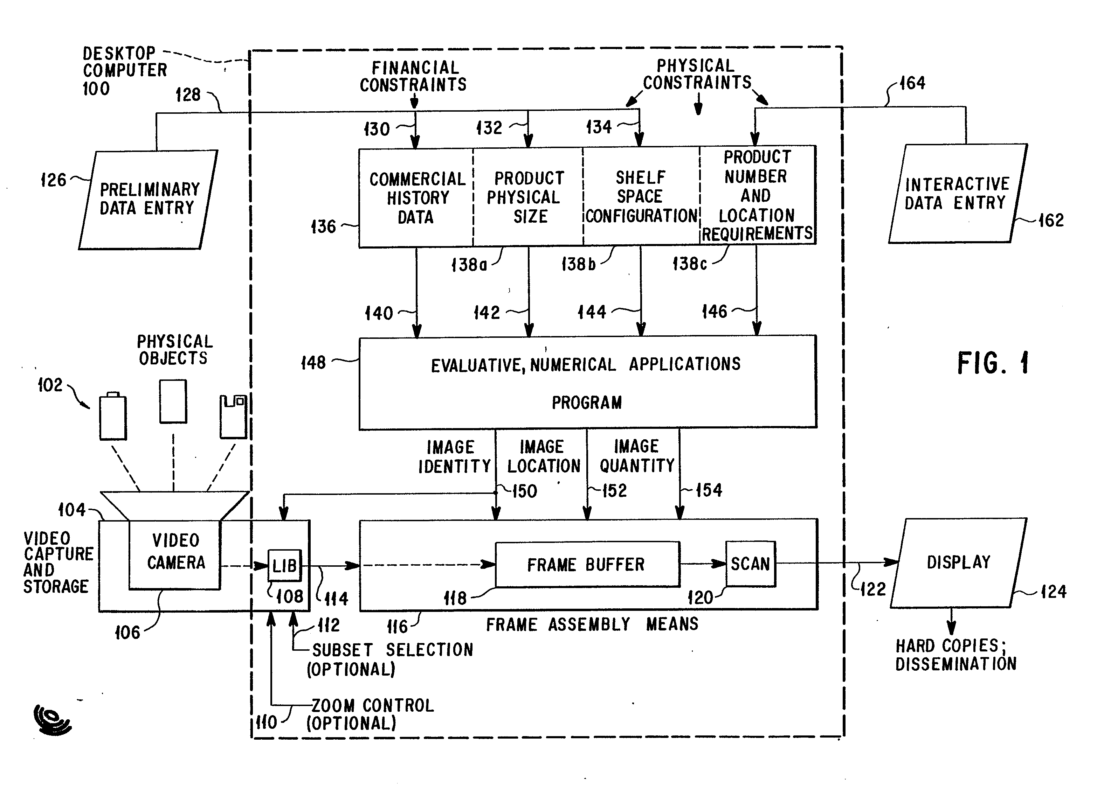

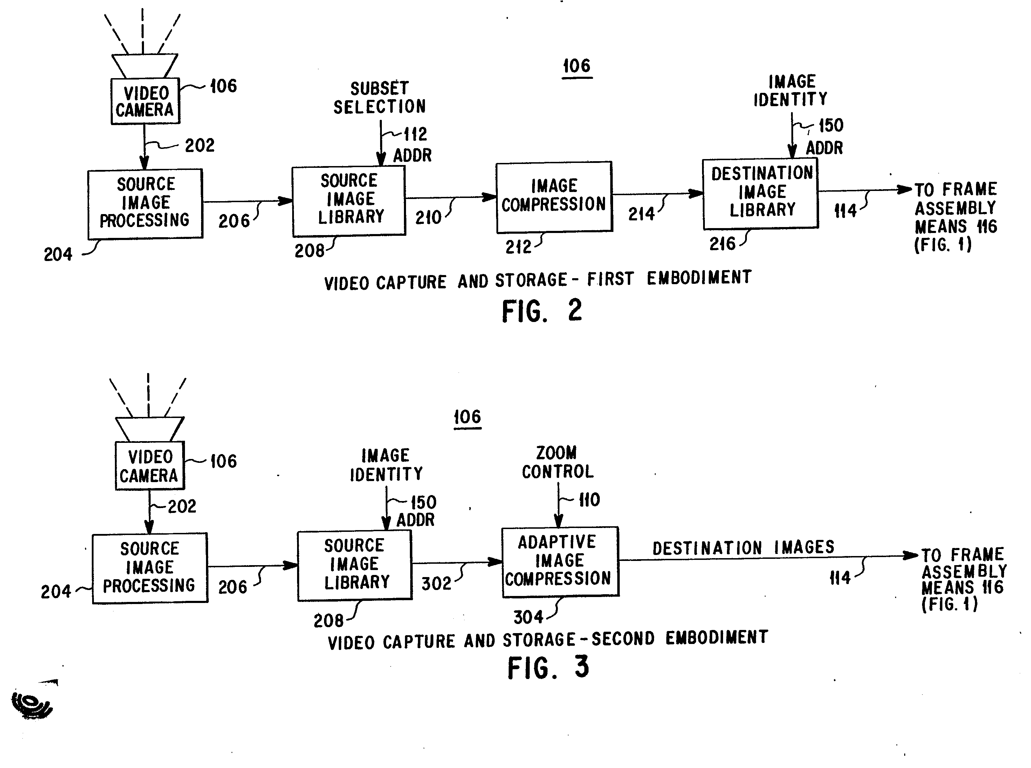

Referring to Figure 1, elements of this invention are contained within a desktop computer 100. For the purposes of this invention, the desktop computer 100 can be thought of as having three inputs and one output. The three inputs are received from a video camera 106, a preliminary data entry device 126, and an interactive data entry device 162. Data entry devices 126 and 162 may be economically chosen to be one and the same physical device, but they are diagrammed separately to emphasize their differing functions, described below. For purposes of this invention, the output of the computer is sent to a display device 124. In a preferred embodiment, desktop computer 100 is an IBM XT or AT computer (available from International Business Machines, Inc., Armonk, New York), or any other IBM-compatible machine.

Physical objects 102 are placed before video camera 106, which is part of video capture and storage device 104. The output of video camera 106 is fed to a library or libraries 108, which are resident in desktop computer 100. A zoom control input 110 and a subset selection input 112 are respective inputs to two possible embodiments of video capture and storage device 104. These two embodiments will be described in greater detail with reference to Figures 2 and 3.

In either embodiment, library element 108 is a memory device whose address input is responsive to an image identity parameter 150, to be described below. The output of library element 108 is sent to a frame assembly means 116.

Frame assembly means 116 comprises a frame buffer 118 and a scanning device 120. The output of scanning device 120 is fed to a display device 124

Frame buffer 118 is random access memory (RAM) which receives and stores digitized images addressed by image identity parameter 150 in library 108. The contents of frame buffer 118, containing an ordered digital representation of images to be displayed, is scanned by scanning device 120. Scanning device 120 may be any one of a number of commercially available devices for converting digital representations of images to signals which display device 124 can display as a video image. In the preferred embodiment, frame buffer 118 and scanning device 120 may both be on a TARGA 16 board available from AT&T (Electronic Photography and Imaging Center, Indianapolis, Indiana). Display device 124 can be any commercially available display device, such as a cathode-ray tube (CRT), which is compatible with the output from scanning device 120.

A preliminary data device 126 comprises the second input to desktop computer 100. Device 126 may be a standard keyboard, possibly in combination with a bar code reader. They are used to input data to memories 136 and 138. In practice, these memories may be different blocks of the same storage device and are accessed by the central processing unit (CPU) of desktop computer 100.

Generally, in the shelf space management environment in which this invention can operate, memory 138 will contain data relating to the dimensions of physical objects (in block 138a) as well as the physical configuration of the simulation space (in block 138b) into which those physical objects are to be placed. Non-physical constraints, such as that relating to financial information, are entered into memory 136. Obviously, if the invention is used in another type of environment, memories 136 and 138 could contain other types of data related to physical objects to be displayed.

An evaluative, numerical applications program 148 uses information from memories 136 and 138 as input parameters, as indicated along paths 140, 142, and 144. Applications program 148 preferably comprises a software program resident in memory which is accessible to be executed by the central processing unit of desktop computer 100. Based on the parameters from memories 136 and 138, applications program 148 calculates the optimum arrangement of images of physical objects in a simulation frame to be displayed on device 124. This identity, location and quantity information is diagrammed in Figure 1 as respective parameter outputs 150, 152, and 154.

These three parameters are used to selectively address specific "write" locations in the frame buffer RAM 118. These parameters effectively determine the location in the frame buffer 118 to which digitized images from library 108 are copied. More than one location for a given image is possible simply by specifying the same image identity parameter on line 150 with different location and quantity parameters on lines 152 and 154, respectively.

Information derived from two of the three inputs to desktop computer 100 have been described. These are, namely, from video camera 106 and preliminary data entry device 126. Based solely on the inputs from these two devices, a simulation frame can be formed and sent to display 124.

An interactive data entry device 162 comprises the third essential input to desktop computer 100. This device may be a digitizer tablet, keyboard, joystick, or the like, or a combination of input devices. Manually entered commands from interactive data entry device 162 are written into physical constraints memory 138. Applications program 148 then acts upon these new requirements by analyzing all four input parameters 140, 142, 144, and 146. The new output from applications program 148 is fed to frame assembly means 116 which sends a revised simulation frame to display device 124.

Figure 1 demonstrates how the three desirable features of the invention are implemented. First, photographic-resolution images are received, by video camera 106. Original data necessary for numerical applications programming is entered through preliminary data entry device 126. Finally, interactive, individual image manipulation may be achieved by manually inputting changes through interactive data entry device 162.

The details of video storage and capture device 104 will now be described with reference to Figures 2 an 3.

In Figure 2, video camera 106 may be any standard video camera, such as Panasonic Model WV-555BN. The video camera 106 produces on line 202 an analog representation of the physical object being imaged. Source image processing device 204 performs an analog-to-digital conversion of the video camera's image representation. This conversion may be accomplished by using a TARGA 16 board from AT&T. Advantageously, the same TARGA 16 board that is used in scanning device 120 (Figure 1) may be used in source image processing device 204. For use in processor 204, the TARGA 16 board would be placed in the digitize mode; in scanning device 120, it is used in the display mode.

Whereas the digitizing is advantageously performed by the above-named special purpose board, additional processing, such as image rotation, background stripping, and image enhancement, may optionally be performed by the central processing unit of the desktop computer 100. These additional processes will be described in greater detail below.

After all processing of the source images has been completed, the digitized enhanced source images are sent to a source image library 208. Source image library 208 is a mass memory device which is advantageously a non-volatile memory such as a magnetic or optical disk, magnetic tape, or tape cartridge. An arbitrarily large number of source images may be compiled in source image library 208. This compilation is performed well before any interactive session and forms the overall data base for the system.

After a source image library has been compiled, particular source images are read out and sent through image compression means 212. The determination of which source images are sent is made by a subset selection signal applied to the address input 112 of the source image library 208. The subset selection input sequentially identifies those particular images which are to be used in the present user session and accesses the appropriate portions of the disk, tape, or tape cartridge.

The image compression means 212 comprises an image compression algorithm which is executed by the central processing unit of desktop computer 100. The details of the image compression algorithm and its software implementation will be described below. The image compression algorithm acts on each source image to produce a destination image which is stored in a destination image library 216. The destination image library 216 is preferably a fast-access RAM. The destination image library 216 contains the compressed images needed for the present user session. During a user session, the destination image library is addressed by the image identity parameter 150 produced by applications program 148 (Figure 1). The particular destination image specified by this image identity parameter is sent to frame assembly means 116 (Figure 1) during a user session.

Figure 3 illustrates a second embodiment of video capture and storage device 104. The structure and function of video camera 106, source image processing device 204, and source image library 208 are identical to the corresponding devices of the Figure 2 embodiment, and so will not be described again. The embodiment of Figure 3 does not contain a destination image library corresponding to library 216 (Figure 2). The embodiment of Figure 3 contains only one image library corresponding to library element 108 (Figure 1). Source image library 208 in Figure 3 is addressed by the image identity parameter 150. The digitized source images thereby accessed from source image library 208 are sent to adaptive image compression means 304 during a user session. A zoom control parameter 110 is applied to the adaptive image compression means 304. This parameter is generated during a user session through interactive data entry device 162 (Figure 1). Destination images generated by the image compression algorithms are sent directly to frame assembly means 116 (Figure 1).

Functioning of the Invention

Figure 1 illustrates a flow diagam of the invention. The physical objects 102 whose images are to be assembled and eventually displayed on display device 124 are individually photographed, for example, from a variety of viewing angles, by video capture and storage device 20. Video capture and storage device 106 provides enhanced digitized photographic-resolution images which can be stored for display on command at a later time.

In one embodiment of the invention the subset selection signal 112 is applied to the video capture and storage device 106 to select a predetermined subset of the main library of images. The subset selection signal is either pre-programmed or generated by the user through interactive subset selection.

A second input to video capture and storage device 106 is zoom control input 110. The zoom control can be used in either embodiment, although the second embodiment (shown in Figure 3) is better adapted to use the zoom feature. The zoom feature will thus be detailed only in regard to Figure 3, below.

The details of operation of the two embodiments of video capture and storage device 106 are described below. It is an important feature of any embodiment of the invention that it reduce the storage size of each of the physical object images to the minimum size necessary to match the resolution capability of the frame assembly means 116 and display device 124.

Frame assembly means 116 assembles the selected subset of video images from video capture and storage means 106 into a simulation frame which is output to display device 124 in response to parameters generated by evaluative numerical applications program 148. To facilitate this assembly, applications program 148 must provide the following information: (a) which physical object images are to be displayed (path 150), (b) where they are to be displayed (path 152), and (c) the quantity of the product which is to be displayed at a given location (path 154). Based on this information, frame assembly means 116 sends the assembled simulation frame to display device 124 whose resolution quality should match the resolution demanded by the compressed video images which enter assembly means 116. In a practical embodiment, the display may have a resolution capability of 512 x 482 picture elements (or pixels), each element being defined by 16 bits. From the display of assembled images of physical objects, hard copies of the simulation frame can be made and disseminated by means well-known in the art.

Data entry devices 126 and 162 provide the source of information on which frame assembly means 116 operates (namely, image identity, location, and quantity on paths 150, 152, and 154, respectively).

Information comprising both non-physical (e.g., financial) constraints and physical constraints which must be entered preliminary to any user session is entered from preliminary data entry device 126. These constraints are entered into respective locations in memories 136 and 138 prior to a user session. The non-physical constraints in a common application might comprise such information as commercial history data regarding each individual consumer product. The physical constraints comprise information about each product's physical dimensions as well as the dimensions of the available space configuration. In one application, this would comprise the number of linear feet of shelf space available. Thee financial and physical constraints which are entered prior to any user session are used as input parameters to the evaluative numerical applications program 148.

Applications program 148 must be specifically adapted for a particular application. The internal details of the program 148 are not essential to the inventive concept of this invention. However, it may be briefly stated that there are applications programs of widely varying complexity. An example of an applications program is one which arranges a variety of products on available shelf space in proportion to their past sales volume, with the high-volume sales items on the upper shelves. It is obvious that more sophisticated programs can be devised to implement marketing strategies which have been developed empirically over time, based on customer response to shelf displays. One program which utilizes a relatively sophisticated space management algorithm is the SPACEMAN program.

The applications program resident in the SPACEMAN system is easily adapted for use in the present invention. The SPACEMAN applications program is a good example of a more complex applications program. As stated in the Summary, an improvement of the present invention over SPACEMAN lies in its improved image resolution for any given applications program.

In SPACEMAN, the amount of shelf "frontage" space allocated to a given consumer product can be determined to be proportional to any combination of factors. These factors include the product's cash sales volume, profit margin, unit sales, and market share. The program can also use these factors to determine the depth of products behind the front products, as well as how high they can safely be stacked. This demonstrates the invention's ability to calculate in three dimensions, even when it displays two dimensions.

Since desktop computer 100 is a general purpose computer, the applications program 148 can consider information which is at first glance seemingly extraneous to display considerations. For example, ordering, delivery and stocking schedules impact product space allocation. The size and configuration of an "off-camera" inventory storage area can also impact how many items are displayed. This type of information can be entered into memories 136 or 138, either preliminarily through 126 or interactively through 162. Then, program 148 can calculate, for example, how best to prevent overstocking or understocking.

As stated previously, memories 136 and 138 are actually just different blocks of the same CPU-addressable memory. As the preceding decription of the SPACEMAN applications program reveals, there is often a blurring of the distinction between physical and financial constraints. This lack of a natural bifurcation does not hinder the software designer, because of the functional continuity of memories 136 and 138.

After the frame assembly means 116 has sent the first assembled simulation frame to display device 124, the user viewing the display may decide to override certain portions of the arrangement of physical objects (such as consumer products) in the available physical space (such as store shelving). Parameters or constraints which are impossible or impractical to be evaluated by a computer, such as subjective aesthetic factors, are then interactively entered into the computer via interactive data entry device 162. The implications of subjective evaluation can, however, be evaluated according to objective (e.g., financial) criteria by objectively analyzing the impact of those subjective factors. The manually entered information corresponding, for example, to changing the arrangement of simulated products on the store shelving, is stored in memory 138c.

The evaluative numerical applications program 148 receives this new information as an input parameter along path 146 in conjunction with the preliminarily entered financial and physical constraints which are received along paths 140, 142, and 144. Based on all of this information, the evaluative numerical applications program 148 again produces control parameters for frame assembly means 116 comprising the revised product identity, location and quantity along paths 150, 152, and 154. A revised simulation frame output is sent to display device 124. The user may then view the results of his modification. This interactive updating of the simulation frame's display can be repeated indefinitely.

The evaluative numerical applications program 148 can flexibly prioritize the interactively entered constraints imposed on it by user 158. That is, the degree to which the user can override the results of the originally assembled simulation frame can be controlled by program 148 by having it look for partially or totally impermissible arrangements.

Figures 2 and 3 present flow diagrams of particular embodiments of video capture and storage device 106. Referring to Figure 2, each product which is desired to be displayed is placed before video camera 106. Preferably a representative for each of a plurality of views of each product is produced. Each product is preferably photographed from a variety of different angles so that different orientations of the product may be simulated in the final video display of the store shelves. For example, the front, side, back, and top of a product could be photographed to simulate product orientations on a store shelf. The analog video signal representing the image of the product being photographed is output on path 202 to source image processing device 204.

In processing device 204, the analog signal is digitized. In addition top the basic digitization of the video signal, source image processing device 204 may perform other functions.

Processing device 204 may numerically analyze and rotate the digitized video image by any chosen angle, perhaps to prevent the impression that a product is improperly tilted or skewed as it sits on store shelves. Also, by manipulation of the horizontal and vertical indexes of the digitized array, representations of physical objects may be rotated in multiplies of 90°. For instance a physical object which appears vertical in the original photographic representation can be made to appear horizontally disposed in the final simulation display.

Stripping the background from the image reduces the amount of memory space required to store the digitized image. In a simple embodiment, the background which is stripped away is all the digital information which is outside the smallest rectangle that encompasses the physical object. In a more elaborate embodiment, all of the background information outside a close contour of the physical object is removed.

Finally; source image processing device 204 may perform digital image enhancement techniques. For example, composite colors can be made more pure, and, in monochromatic display applications, gray pixels can be shifted toward black or white extremes to given more contrast. Colors can also be remapped for any given application. The color depth, as represented by the number of bits per pixel, can be reduced.

The entry of physical object size information can be automated. That is, instead of manually entering physical size data into memory 138a via preliminary data entry device 126 (Figure 1), source image processing device 204 can peform the measurement function directly and enter it into memory 138a. This direct measurement can be accomplished several ways.

The processor can analyze the physical object's projection against a background grid behind the object as it is images. The greater the number of grid lines the object obscures, the larger the measurement processing device 204 reports.

Alternatively, the object is to be made to occupy the full screen of the video camera. The size of the object is easily calculated from a measurement of the distance between the camera and the object.

Finally, the camera may be kept a given distance from the objects, and the size of the objects is calculated to be proportional to the number of source image pixels it occupies.

As source image processing device 204 completes its processing of the source image, it sends the enhanced digitized image to a source image library 208. In general, the objects as photographed occupy as such space as possible on the taking screen. However, it is important to note that the various entries in the source image library 208 occupy differing amounts of storage space in the library since each original product was of a different size and shape. This results in a conservation of overall storage space in memory.

But, what all source images have in common is the fact that they occupy more memory space as source images than is necessary to give comparable resolution quality when they are reduced in size and occupy only a portion of the simulation frame. The use of blocks of memory which are larger than necessary results in a slowdown in system performance since, with each interactive command, the system must process a greater amount of information.

As will be seen in the discussion of image compression means 212, system speed can be enhanced without unduly sacrificing quality of the simulation frame by reducing the amount of storage allocated to each image before it is ever processed interactively.

But first, it must be recognized that not all the images in the source image library 208 will be used during every user session. Thus, in the embodiment of Figure 2, subset solution is performed before image compression. Subset selection identifies a smaller group of images out of the available main library storage. Image compression processing is then performed on the selected subset.

The subset selection signal 112 must be the result of an original choice by the user, be it interactively entered through device 162 or preliminarily entered through device 126. The subset selection signal specifies only the identity of the images to be selected, not their quantity or location.

As each selected source image must still occupy more memory space than will be necessary, it is fed through image compression means 212. The essential function of the compression algorithms operating therein is to convert a video image of a certain number of pixels into another video image containing fewer pixels. Of course, any compression should minimize the loss of information between the source image and the destination image to preserve the picture resolution.

Most known compression algorithms involve averaging a plurality of source image picture elements to arrive at a single destination image picture element. As the amount of time it takes to compress a given source image is proportional to the complexity of operations used in the implementation of the compression algorithm, it is advantageous from the viewpoint of system speed to employ an algorithm which is as simple as possible. As will be described more fully below, a special purpose integer compression algorithm which is employed in the preferred embodiment of this invention utilizes simple and fast integer calculations rather than the complex and time-consuming floating-point calculations.

The degree to which the image must be compressed is directly dependent on the reduction in physical size which is required, for example, to fit a given product onto a given shelf space. That is, a simulation frame which simulates a very large physical area will require that the source images be reduced in size by a large factor so that they are in the proper scale on the final video simulation. The compression factors are thus determined on an image-by-image basis, but always depend on the size of the physical area, such as shelf space, in which images are to be arranged. The size of this physical area can be either preliminary entered via 126 or interactively entered via 162, a choice which is predetermined and then executed by the computer's CPU.

It is important to remember that the simulation frame is representative of a real world configuration. Thus the images must remain in proportion to their real size in relation to the overall simulation frame.

Each selected compressed image is then stored in a destination image library 216. The contents of this memory represent the compressed images which are to be used in the present user session. The amount of memory space occupied by each destination image is the minimum necessary to match the resolution of frame buffer 118 (Figure 1). That is, the destination image will have no more bytes than is necessary to exactly fill its own portion of the simulation frame in frame buffer RAM 118. In this way, during an interactive session destination images need only be directly copied from destination image library 216 into frame buffer RAM 118. They do not require actual processing, which would slow the system.

As was stated in the Summary of the Invention, the maximum amount of video data that need be copied is limited to a predetermined number. This predetermined number is the size of the simulation frame in frame buffer 118. The total number of pixels of all the images in the simulation frame, plus the number of any background pixels, must always add up to this predetermined number. It should be noted that the frame buffer 118 is initialized to the desired background color before a session, and physical object image are "written over" that background.

Therefore, the reduction in the amount of data caused by image compression to match the resolution capabilities of frame buffer 118 and display device 124 does not compromise video resolution as it appears to the user, since that is predetermined by the size of frame buffer 118 and the number of rows and columns in display device 124.

After all necessary destination images have been stored in the destination image library 216, they are selectively copied to the proper locations in frame buffer 118, to be sent to display device 124 for viewing by the user. Applications program 148 generates image identity parameter 150, being used to address destination image library 216 during a user session to determine the selection of destination images to be sent to the frame assembly means 116.

Figure 3 shows a flow diagram of a second embodiment of the video capture and storage device 106. The functioning of video camera 106, source image processing device 204, and the source image library 208 are essentially identical to the functioning of the corresponding elements in the Figure 2 embodiment.

The Figure 3 embodiment overcomes the need for a destination image library 216 (Figure 2) for which source images must be preliminarily compressed. Instead, the Figure 3 embodiment compresses source images "on the fly" during an interactive session.

In Figure 3, the adaptive compression means 304 responds to a user-originated zoom control signal 110 which is determined from zoom commands entered via interactive data entry device 162.

Of course, various images in the final simulation frame must appear in the same scale, regardless of which embodiment is employed. This means that adaptive compression means 304 must recognize and implement the different factors by which different source images must be compressed, as well as obeying the raw zoom commands from the interactive data entry device 162.

The effect of a user zooming in on a smaller portion of the simulation frame is to require the compression algorithm to reduce the source images by a smaller factor. In this case, since each of the many elements in the sdource image library 208 may be individually chosen, no subset selection is needed. The source image addressed by image identity signal 150 goes directly from the source image library 208 through adaptive compression means 304 to be immediately copied with other source images into a final simulation frame.

A first difference between the embodiments of Figures 2 and 3 is that all the source images in mass memory device 208 are available to the user of the Figure 3 embodiment. The time-consuming task of compressing a new subset of source images into a new destination image library is avoided. The entire set of images, not merely a subset, is at the user's immediate disposal.

The second difference between the embodiments of Figures 2 and 3 is that the embodiment of Figure 3 allows the user to zoom in on a particular area of the simulation frame without having to compile a separate destination image library (216 of Figure 2).

The Figure 3 embodiment requires faster hardware execution of a given compression algorithm than would be necessary in the Figure 2 embodiment. Faster silicon, the use of array processors, and the use of microprocessors with greater register widths make this embodiment feasible for interactive use. When this hardware is coupled with specialized graphics processors, the speed limitations of the system as a whole are drastically reduced. This allows higher and higher resolution images to be manipulated with greater speed.

Image Compression

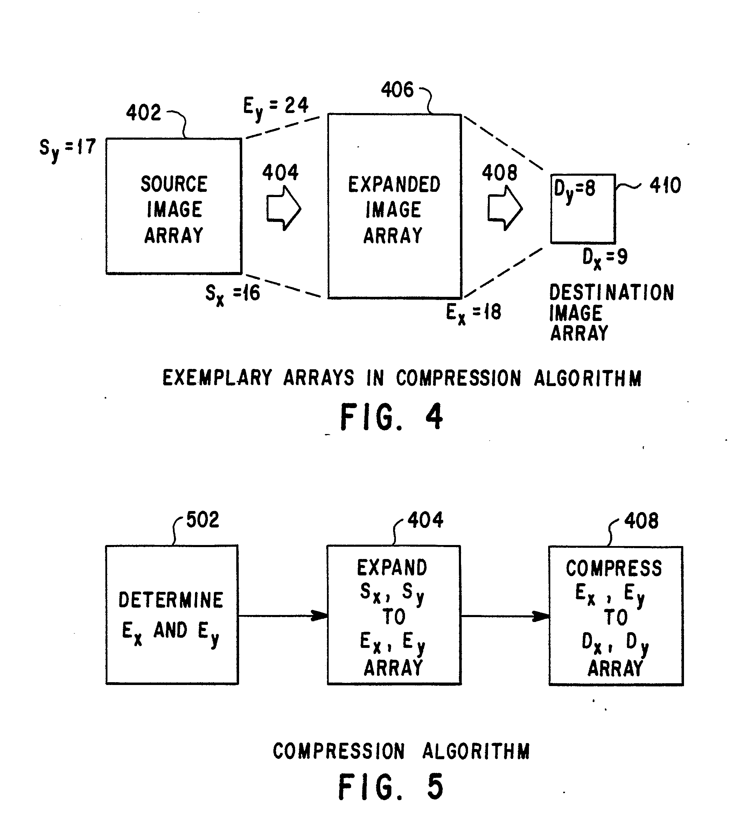

The image compression algorithms found in elements 212 and 304 in Figures 2 and 3, respectively, are programmed as follows in the preferred embodiment of the invention. Figure 4 presents a diagram of exemplary image arrays useful in explaining the compression algorithm. As stated above, the purpose of the algorithm is to reduce the memory storage requirements of a source image by efficiently reducing the number of picture elements while retaining as much of the picture quality as possible.

A source image 402 can be conceptualized as an array of picture elements having dimensions $S_x$ by $S_y$. It is desired to reduce this source image array 402 to a destination image array 410 having arrayed dimensions $D_x$ and $D_y$, where $D_x$ by $D_y$ is generally smaller than $S_x$ by $S_y$. As can be seen from Figure 4, this compression is not accomplished directly, but rather by means of an intermediate expansion of the source image array 402 into an expanded image array 406 before that expanded image array is compressed into the destination image array by a very simple averaging operation.

It should be noted that the algorithm could be used to expand an image. This occurs when the expanded and destination image arrays are equal in size. As will be seen, the expansion process stands by itself, and no subsequent averaging operation need be performed thereafter.

Figure 5 presents a basic flow chart of how the expansion and subsequent compression are accomplished in software. First, the size of the expanded image array is determined at 502. The dimensions of the expanded image array, $E_x$ and $E_y$ are solely dependent on the dimensions of the source image array 402 and the destination image array 410. Stated succinctly, expanded image dimension $E_x$ is the least integral multiple of destination image dimension $D_x$ which is greater than or equal to corresponding source image dimension $S_x$. Similarly, expanded image dimension $E_y$ is the least integer multiple of destination image dimension $D_y$ which is greater than or equal to source image dimension $S_y$. For example, if $S_x$ is 16 and $D_x$ is 9, $E_x$ must be 18 since 18 is the least multiple of 9 greater than or equal to 16. Similarly, if $S_y$ is 17 and $D_y$ is 8, $E_y$ must be 24 since 24 is the least multiple of 8 which is greater than or equal to 17.

Once the dimensions of expanded image array 406 are determined, the source image is expanded at 404. To enhance speed of operation, no complicated combination steps are performed on the elements of source image array 402. Rather, selected source image elements are merely copied into two locations in expanded image array 406.

This duplication of only selected source image elements results in a distortion of the expanded image, but in practical embodiment, if the location of the doubly-copied picture elements are dispersed throughout the image, the distortion is minimized. What minimal distortion is present in the expanded image is smoothed even more by the simple averaging operation, described below. Thus, an optimization for system speed is accomplished without unduly compromising pictorial quality.

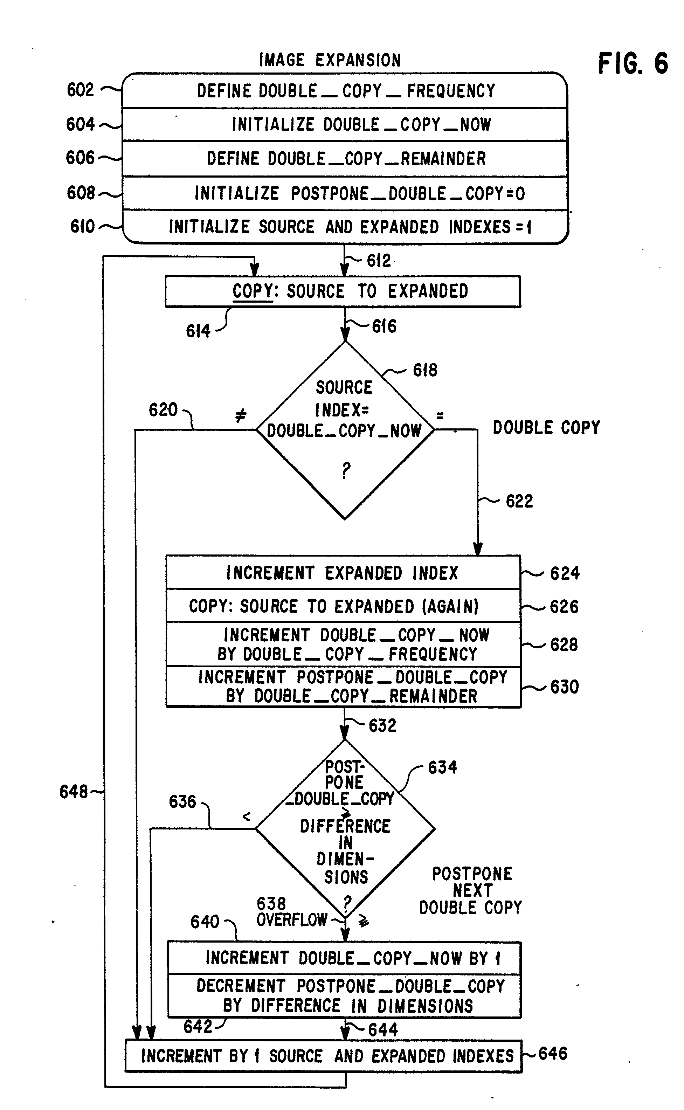

Figure 6 is a detailed flow chart of the software implementation of the essence of image expansion process 404 from Figure 5 in the preferred embodiment. For clarity, only the expansion of one row (or column) of the source image is detailed. It is to be understood, however, that this process is to be applied to all columns and rows of the source image.

The algorithm begins by defining at 602 the frequency at which source image pixels are copied into two successive expanded image pixels. The value double.copy.frequency is defined as the greatest integer less than the quotient of the source image dimension, and the difference of the expanded dimension minus the source dimension. The variable double.copy.now is initialized to this value, double.copy.frequency, at 604. The value double.copy.remainder is defined at 606 as the remainder of the quotient where the source image dimension is divided by the difference of the expanded dimension minus the source dimension. At 608, the variable postpone .double.copy is initialized to 0. At 610, the running indexes for the source and expanded image arrays are initialized to 1.

The program then enters an expansion loop via 612. At 614, a picture element is copied from the source image array to the expanded image array.

Then, a decision is made at 618 as to whether that source pixel should be copied into two successive expanded pixels. If it is not to be copied twice, the program proceeds along path 620 to execute the increment of the running indexes at block 646 before returning to the beginning of the expansion loop via path 648.

If the picture element is to be copied twice, the program proceeds via path 622 to increment only the running index of the expanded image array at 624. Then, at 626, the same source pixel is copied for a second time to the following expanded pixel location. The variable double.copy.now, which represents the indexes of the source pixels which are to be copied twice, is incremented at 628 by the fixed value double.copy .frequency. The variable postpone.double.copy is incremented at 630 by the fixed value double copy remainder at 630 to prepare for decision block 634.

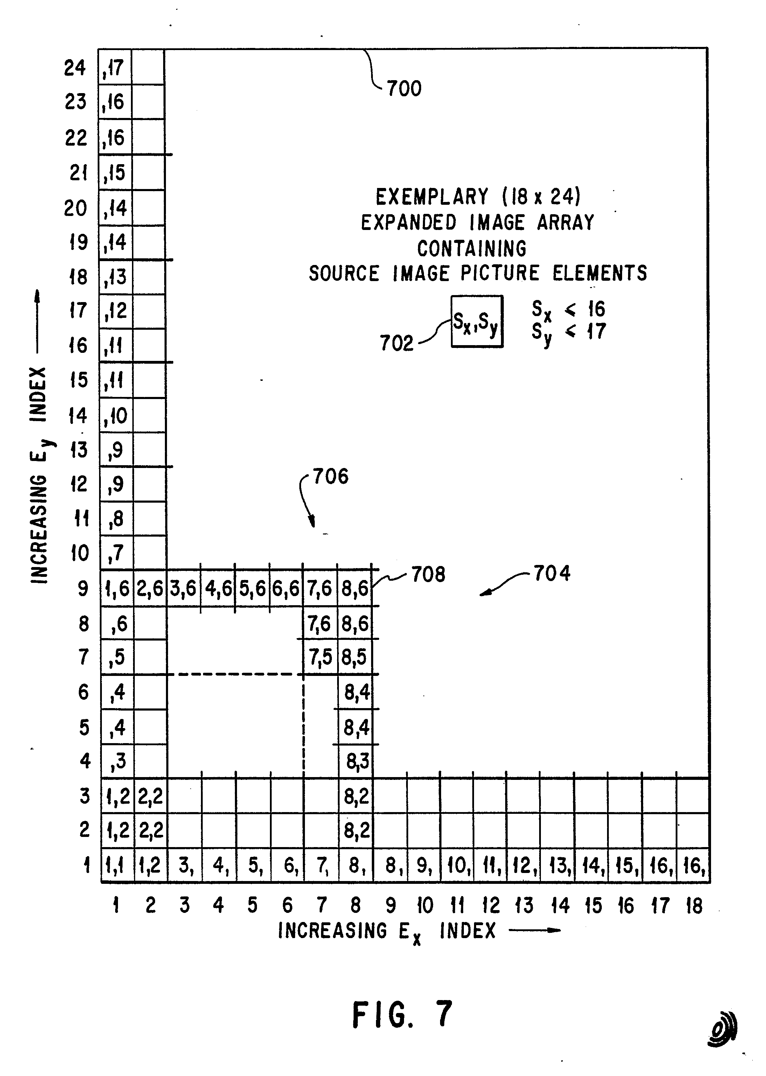

The purpose of decision block 634 is to determine whether or not to postpone the next time a source pixel is copied twice. As will be seen more easily with reference to Figure 7, this decision is necessary in order to allow the even dispersal of distortion introduced by the repetition of the same pixel. If such a postponement is deemed unnecessary, as when the variable postpone.double.copy is less than the difference in the dimensions of the source and expanded image arrays, the program skips to block 646 to increment the running indexes of the source and expanded image arrays.

However, since the variable postpone.double.copy is periodically incremented at 630, whenever that variable "overflows" (exceeds or equals the difference in dimensions of the expanded and source arrays), the program will follow path 638 to increment by one the value of the variable double.copy.now. Block 640 effectively delays by one row (or column) the time when decision block 618 will determine that a double copying of a source pixel is necessary. At 642, the "overflow" condition is cancelled. The value of the variable postpone.double.copy is decremented by the difference in dimensions of the expanded and source image arrays so that postpone-double-copy does not continue to exceed this dimension difference. This is necessary to the proper functioning of decision block 634.

After this decrementation is performed, the program executes block 646 to increment the source and expanded running indexes by one to prepare for the next "normal" copying of a picture element at 614.

The expansion process in Figure 6 is to be applied to all rows and all columns of the image arrays. The expansion thus occurs in both the X direction and Y direction. This can be easily accomplished by nesting the software in Figure 6 within a larger loop which accomplishes the expansion process in the same way. That is, the inner loop is executed to expand one full row, while the outer loop is executed to expand all columns.

In the case where an outer loop (column) element (i.e., an entire row) is to be copied twice, the entire inner loop need not be repeated. Rather, the second copy of the row to be repeated can be directly copied from the immediately preceding row in the expanded image array. Thus, in the case of the outer loop, blocks 624 through 642 (Figure 6) can be replaced by a simple copying loop.

Once the expanded image array has been filled at step 404 in Figure 5, all that remains is to compress at 408 the expanded image array to a destination image array. Because of the strategically chosen dimensions of the expanded image array at block 502, the compression process is reduced to a simple averaging technique.

In the case of a color display, three separate averagings must be performed, corresponding to the three color components. In the case of monochrome displays, it is only necessary to perform a single averaging. By using only integer arithmetic, and not employing floating point calculations, the speed of execution of the algorithm is enhanced. There are many ways of representing either color or monochromatic picture elements known in the art. Since the details of the averaging techniques will depend on those representations, and since the mere averaging of plural representations would be a trivial task to one skilled in the art, no further detail is included here.

Figure 7 illustrates an example of an expanded image array 700. It represents the 18 x 24 matrix which necessarily result from a 16 x 17 source image and a 9 by 8 destination image, as described above in reference to Figure 4.

Each of the 432 (18 x 24) expanded array pixels contains a source array pixel $s_x$, $s_y$ expressed in general form in pixel 702. For example, the expanded image array pixel which is in the eighth column 706 and the ninth row 704 was copied from the source pixel having x-index 8, y-index 6.

It can be seen that in this example only source image columns 8 and 16 have source image pixels which were copied twice. Source image array column 8 was copied into expanded image array columns 8 and 9, and source image array column 16 was copied into expanded image array columns 17 and 18.

A more interesting case arises when examining which rows had to be repeated during the execution of the column expansion. As can be seen from Figure 7, source image rows 2, 4, 6, 9, 11, 14, and 16 were copied twice. The irregularity of this sequence is explained in Figure 6 by execution of decision block 634. In Figure 7, the double copying that would otherwise have occurred at row 8 was postponed until row 9, and the double copying of row 13 was postponed until row 14. This is an example of the maximized dispersion of distortion introduced by the expansion process.

Figures 4 and 7 demonstrate that the expansion image array need not be of the same shape as the destination image array. To compress an 18 x 24 array into a 9 by 8 array requires a 2 x 3 block of expanded picture elements (for example, indicated at 708) to be averaged together to form a single destination image picture element. In this particular example, the Y-axis compression is a greater factor than the X-axis compression. The apparent distortion that this disproportionate compression would otherwise cause is minimized by the maximally even distribution of double-copied rows and columns throughout the expanded array.

Also, the exemplary arrays in Figure 4 demonstrate that the source and destination image arrays need not be of the same shape. In Figure 4, the image is actually made shorter but wider by the compression, since the source array's x-dimension is smaller than its y-dimension but the opposite is true of the destination.

In most applications, of course, the physical objects and the finally displayed destination images would preferably be of the same shape. Therefore the proportions of the image should be preserved through the compression. To achieve this, it should be ensured that $S_x/D_x = A \times S_y/D_y$, where A depends on the aspect ratio of the display device.

It should be noted that the relative size of the source and destination image arrays has a direct bearing on the amount of distortion which is introduced during the expansion process. It is apparent from the discussion of block 247 (Figure 5) that distortion is introduced by double copying only when the expanded image array has dimensions different from the source image array. The amount by which an expanded array dimension may exceed the corresponding source array dimension is limited by the corresponding destination array dimension. This is because, as described above, the expanded image array dimension is the least multiple of the destination array dimension which is greater than or equal to the source array dimension.

A strategy for reducing distortion is to provide a source image array which is very large in comparison to the destination image array. This has the effect of reducing the percentage of source image picture elements which must be copied twice, which in turn reduces distortion. Another way of stating this strategy is that there is less distortion introduced when the source image is compressed by a large factor than when it is compressed by a small factor.

It should be clearly understood that the compression algorithm described above is an embodiment which is preferred because of its simplicity and speed of execution. More complex compression algorithms may be employed when greater pictorial accuracy is required. Those algorithms must generally possess the ability to combine a potentially non-integral number of source image elements into a single destination image element. In the preferred embodiment, which is useful for all but the most demanding applications, no floating point calculations are necessary to form an expanded array element and only an integral number of expanded picture elements need be averaged.

Conclusion

It should be emphasized that, except for the video camera itself, all physical elements necessary for the implementation of this invention may fit into a desktop computer. As the technology of storage media progresses, it becomes practical to store gigabyte libraries of source images in modules adapted for use in desktop computers.

This invention is useful in applications in addition to arranging consumer products on shelf space. For example, the ability of this invention to manipulate photographic-resolution images would be well employed in the arrangement of photographs and text into camera-ready copy for printing. Also, layouts for interior floor plans or external landscaping could be easily simulated. The invention could be readily used to enhance the realism of video amusement devices. Finally, the invention could be used to "mix and match" different elements of a larger image This could be useful in accurately visualizing, for example, how different hub caps would appear in combination with a given car body.

These are but examples of applications requiring the manipulation of photographic-resolution images on a video display screen responding to human interactive input and pre-programmed numerical control.

Thus, the scope of the invention should not be limited by any examples described above, but should be defined only in accordance with the following claims.

## Claims

1. A method of producing photographic-resolution simulation frames having a predetermined number of digital picture elements (pixels) determining a resolution capability of said simulation frames, and comprising one or more photographic-resolution destination images, said method comprising the following steps:

capturing first photographic-resolution representations of physical objects;

compressing second photographic-resolution representations derived from said first photographic-resolution representations into respective photographic-resolution destination images having the minimum number of pixels necessary to match said resolution capability of said photographic-resolution simulation frame; and

assembling one or more of said photographic-resolution destination images as said photographic-resolution simulation frame.

2. A method according to claim 1, wherein said step of assembly comprises:

numerically evaluating pre-programmed physical constraints determined before said compression step; and

determining an optimum object quantity and intra-frame location for each destination image to be assembled into said simulation frame.

3. A method acccording to claim 1, wherein said step of assembling comprises:

numerically evaluating pre-programmed non-physical constraints determined before said compression step; and

determining an optimum object quantity and intra-frame location for each destination image to be assembled into said photographic-resolution simulation frame.

4. A method according to claim 1, wherein said step of assembling comprises:

numerically evaluating pre-programmed non-physical constraints determined before said compression step;

numerically evaluation constraints determined by a user after viewing said photographic-resolution simulation frame; and

determining an optimum object quantity and intra-frame location for each destination image to be assembled into said photographic-resolution simulation frame.

5. The method according to claim 1, wherein said step of assembling comprises:

numerically evaluating pre-programmed constraints determined by said user after viewing said photographic-resolution simulation frame; and

predetermining an optimum object quantity and intra-frame location for each destination image to be assembled into a revised photographic-resolution simulation frame.

6. A video computer-aided design system for producing photographic-resolution simulation frames which have a predetermined number of picture elements (pixels) determining a resolution capability of said simulation frames, and which comprise one or more photographic-resolution destination images, said system comprising:

means for processing first photographically derived photographic-resolution representations of physical objects to produce photographic-resolution source images;

means for compressing said photographic-resolution source images into respective photographic-resolution desitination images having the minimum number of pixels necessary to match said resolution capability of said photographic-resolution simulation frame; and

means for assembling one or more of said photographic-resolution destination images as said photographic-resolution simulation frame.

7. A method of producing photographic-resolution simulation frames having a predetermined number of digital picture elements (pixels) and comprising one or more photographic-resolution destination images, said method comprising the following steps:

capturing a first quantity of photographic-resolution representations of a corresponding quantity of physical objects;

compressing a subset of a second quantity of photographic-resolution representations dervied from said first quantity into respective photographic-resolution destination images; and

directly copying, one or more times, one or more of said photographic-resolution destination images into said phtographic-resolution simulation frame.

8. A video computer-aided design system for producing photographic-resolution simulation frames which have a predetermined number of picture elements (pixels) and which comprise one or more photographic-resolution destination images, said system comprising:

means for processing a first quantity of photographically derived photographic-resolution representations of a corresponding quantity of physical objects to produce a corresponding quantity of photographic-resolution source images;

means for compressing a second quantity of photographic-resolution representations derived from said first quantity of photographic-resolution source images into respective photographic resolution destination images; and

means for directly copying, one or more times, one or more of said photographic-resolution destination images into said photographic-resolution simulation frame.

9. A method of producing photographic-resolution simulation frames having a predetermined number of digital picture elements (pixels) and comprising one or more photographic-resolution destination images, said method comprising the following steps:

capturing a first quantity of photographic-resolution representations of a corresponding quantity of physical objects;

compressing individual representations within a second quantity of photographic-resolution representations derived from said quantity into respective individual photographic-resolution destination images; and

directly inserting, one or more times, one of said individual photographic-resolution destination images into said photographic-resolution simulation frame immediately after each said one individual photographic-resolution destination image is formed in said compressing step.

10. A video computer-aided design system for producing photographic-resolution simulation frames which have a predetermined number of picture elements (pixels) and which comprise one or more photographic-resolution destination images, said system comprising:

means for processing a first quantity of phtographically derived photographic-resolution representations of a second quantity of physical objects to produce a corresponding quantity of photographic-resolution source images;

means for compressing individual source images within said second quantity of photographic-resolution source images into respective individual photographic-resolution destination images; and

means for directly inserting, one or more times, one of said individual photographic-resolution destination images into said photographic-resolution simulation frame immediately after each said one individual photographic-resolution destination image is formed in said compressing means.

11. A method of transforming a video image into a simulation frame for display, comprising the steps of:

forming a source image array containing source image pixels representative of an image of a physical object;

expanding said source image array to produce an expanded image array containing expanded image pixels, said expanded image array having dimensions not less than corresponding dimensions of said source image array;

keeping one, or averaging an integral plurality of said expanded image pixels to produce destination image pixels in a destination image array; and

inserting said destination image array pixels into said simulation frame for display.

12. A system for transforming a video image into a simulation frame for display, comprising:

means for filling a source image array with pixels representative of a physical object;

means for expanding said source image array to produce an expanded image array containing expanded image pixels, said expanded image array having dimensions not less than corresponding dimensions of said source image array;

means for copying one, or averaging an integral plurality, of said expanded image pixels to produce destination image pixels in a destination image array; and

means for inserting said destination image array pixels into said simulation frame for display.

13. A system according to claim 12, wherein said means for expanding includes:

means for copying all source image pixels into corresponding expanded image pixels, and

means for copying selected source image pixels into plural expanded image pixels.

14. A system according to claim 13, wherein said means for copying selected source image pixels comprises means for choosing selected source image pixels which are essentially evenly dispersed throughout said source image array.

15. A system according to claim 14 wherein said means for choosing comprises:

means for detecting whether or not an overflow condition has arisen;

means for double copying every m-th source image pixel into two expanded image pixels when said overflow condition is not detected; and

means for double copying the (m + 1)-th source image pixel into two expanded image pixels when said overflow condition is detected.

16. A system according to claim 15, wherein said overflow condition occurs when an accumulated value exceeds a threshold which is a difference between the expanded and source image dimensions, and wherein said system further comprises:

means for repeatedly incrementing a variable by a remainder of a quotient whose numerator is the source image's dimension and whose denominator is said difference between the expanded and source image dimensions.

17. A system according to claim 6 further comprising means for stripping a background away from said photographic resolution representations of said physical objects.

18. A system according to claim 6 further comprising means for rotating said representation to make an image of said physical object appear correspondingly aligned or tilted in said simulation frame.

19. A system according to claim 6 wherein said means for compressing comprises means for applying a compression algorithm having only integer calculations and no floating point calculations to said source images to produce destination images which may occupy different amounts of memory space than said source images.

20. A system according to claim 19, wherein said compression algorithm applying means comprises:

means for filling a source image array with source image pixels representative of said physical object;

means for expanding said source image array to produce an expanded image array containing expanded image pixels, said expanded image array having dimensions not less than corresponding dimensions of said source image array;

means for keeping one, or averaging an integral plurality, of said expanded image pixels to produce destination image pixels in said destination image array; and

means for inserting said destination image pixels into said simulation frame for display.

21. A system according to claim 20, wherein said means for expanding includes:

means for copying all source image pixels into corresponding expanded image pixels, and

means for copying selected source image pixels into plural expanded image pixels.

22. A system according to claim 21 wherein said means for copying selected source image pixels comprises means for choosing selected source image pixels which are essentially evenly dispersed throughout said source image array.

23. A system according to claim 22, wherein said means for choosing comprises:

means for detecting whether or not an overflow condition has arisen;

means for double copying every m-th source image pixel into two expanded image pixels when said overflow condition is not detected; and

means for double copying the $(m+1)$-th source image pixel into two expanded image pixels when said overflow condition is detected.

24. A system according to claim 23 wherein said overflow condition is reached when an accumulated value exceeds a threshold which is a difference between the expanded and source image dimensions, and wherein said system further comprises:

means for repeatedly incrementing a variable by a remainder of a quotient whose numerator is the source image's dimension and whose denominator is said difference between the expanded and source image dimensions.

25. A system according to claim 6, wherein said means for assembling comprises:

means for numerically evaluating at least one of preprogrammed physical and non-physical constraints, said constraints being determined before said photographic-resolution source images are compressed by said means for compressing;

means for numerically evaluating constraints determined by a user after viewing said photographic-resolution simulation frame; and

means for determining an optimum object quantity and intra-frame locatiion for each destination image to be assembled into said photographic-resolution simulation frame based on at least one of said physical, non-physical, and user determined constraints.

FIG. 1

0 270 319

VIDEO CAPTURE AND STORAGE - FIRST EMBODIMENT

FIG. 2

VIDEO CAPTURE AND STORAGE - SECOND EMBODIMENT

FIG. 3

0 270 319

EXEMPLARY ARRAYS IN COMPRESSION ALGORITHM

## FIG. 4

COMPRESSION ALGORITHM

## FIG. 5

IMAGE EXPANSION

FIG. 6

602 — DEFINE DOUBLE_COPY_FREQUENCY

604 — INITIALIZE DOUBLE_COPY_NOW

606 — DEFINE DOUBLE_COPY_REMAINDER

608 — INITIALIZE POSTPONE_DOUBLE_COPY = 0

610 — INITIALIZE SOURCE AND EXPANDED INDEXES = 1

— 612

COPY: SOURCE TO EXPANDED

614 —        — 616

— 618

SOURCE INDEX = DOUBLE_COPY_NOW ?

620 — ≠

= DOUBLE COPY

— 622

INCREMENT EXPANDED INDEX — 624

COPY: SOURCE TO EXPANDED (AGAIN) — 626

INCREMENT DOUBLE_COPY_NOW BY DOUBLE_COPY_FREQUENCY — 628

INCREMENT POSTPONE_DOUBLE_COPY BY DOUBLE_COPY_REMAINDER — 630

— 632

POST-PONE_DOUBLE_COPY > DIFFERENCE IN DIMENSIONS ? — 634

648 —

636 — <

638 OVERFLOW — ≧

POSTPONE NEXT DOUBLE COPY

640 — INCREMENT DOUBLE_COPY_NOW BY 1

DECREMENT POSTPONE_DOUBLE_COPY BY DIFFERENCE IN DIMENSIONS

642 —        — 644

INCREMENT BY 1 SOURCE AND EXPANDED INDEXES — 646

EXEMPLARY (18 x 24)
EXPANDED IMAGE ARRAY
CONTAINING
SOURCE IMAGE PICTURE ELEMENTS

702 — $\boxed{S_x, S_y}$   $S_x < 16$   $S_y < 17$

700

706

708

704

INCREASING $E_y$ INDEX ⟶

INCREASING $E_x$ INDEX ⟶

| | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| 24 | ,17 | | | | | | | | | | | | | | | | | |
| 23 | ,16 | | | | | | | | | | | | | | | | | |
| 22 | ,16 | | | | | | | | | | | | | | | | | |
| 21 | ,15 | | | | | | | | | | | | | | | | | |
| 20 | ,14 | | | | | | | | | | | | | | | | | |
| 19 | ,14 | | | | | | | | | | | | | | | | | |
| 18 | ,13 | | | | | | | | | | | | | | | | | |
| 17 | ,12 | | | | | | | | | | | | | | | | | |
| 16 | ,11 | | | | | | | | | | | | | | | | | |
| 15 | ,11 | | | | | | | | | | | | | | | | | |
| 14 | ,10 | | | | | | | | | | | | | | | | | |
| 13 | ,9 | | | | | | | | | | | | | | | | | |
| 12 | ,9 | | | | | | | | | | | | | | | | | |
| 11 | ,8 | | | | | | | | | | | | | | | | | |
| 10 | ,7 | | | | | | | | | | | | | | | | | |
| 9 | 1,6 | 2,6 | 3,6 | 4,6 | 5,6 | 6,6 | 7,6 | 8,6 | | | | | | | | | | |
| 8 | ,6 | | | | | | 7,6 | 8,6 | | | | | | | | | | |
| 7 | ,5 | | | | | | 7,5 | 8,5 | | | | | | | | | | |
| 6 | ,4 | | | | | | | 8,4 | | | | | | | | | | |
| 5 | ,4 | | | | | | | 8,4 | | | | | | | | | | |
| 4 | ,3 | | | | | | | 8,3 | | | | | | | | | | |
| 3 | 1,2 | 2,2 | | | | | | 8,2 | | | | | | | | | | |
| 2 | 1,2 | 2,2 | | | | | | 8,2 | | | | | | | | | | |
| 1 | 1,1 | 1,2 | 3, | 4, | 5, | 6, | 7, | 8, | 8, | 9, | 10, | 11, | 12, | 13, | 14, | 15, | 16, | 16, |

FIG. 7